# DEMANDE DE BREVET EUROPEEN

(11) **EP 4 650 269 A1**
(43) Date de publication de la demande: **19.11.2025**
(21) Numéro de dépôt: 25176865.1
(22) Date de dépôt: 16.05.2025
(51) Int. Cl.: B64C 1/06, B64C 1/40, B60R 13/08

(54) **PANNEAU D'HABILLAGE D'UN VÉHICULE**

(30) Priorité: 17.05.2024 FR 2405119
(71) Demandeur: Airbus Operations S.A.S., 31060 Toulouse (FR); Centre National de la Recherche Scientifique, 75016 Paris (FR); Université du Mans, 72000 Le Mans (FR)
(72) Inventeur: ABLITZER, Frédéric, 72100 LE MANS (FR); AKLOUCHE, Omar, 72000 LE MANS (FR); BESSE, Alex, 72700 SAINT-GEORGES-DU-BOIS (FR); GAUTIER, François, 72000 LE MANS (FR); O DONOUGHUE, Patrick, 72000 LE MANS (FR); PELAT, Adrien, 72000 LE MANS (FR); BESLUAU, François, 31060 TOULOUSE (FR)
(74) Mandataire: Novagraaf Technologies

(57) **Abrégé**

La présente invention a pour objet un panneau (10) d'habillage comprenant au moins quatre dispositifs de fixation (16) et une couche centrale (18) recouverte de part et d'autre par une couche inférieure et une couche supérieure (22),
le panneau (10) comprenant au moins quatre trous noirs acoustiques (24) de forme circulaire formés chacun à proximité d'un des dispositifs de fixation (16) du panneau (10),
les trous noirs acoustiques (24) étant formés au moins par une réduction parabolique d'une épaisseur (28) de la couche centrale (18), de manière que l'épaisseur (28) de la couche centrale (18) décroit depuis une circonférence externe (CE) des trous noirs acoustiques (24) jusqu'à une circonférence interne (CI) des trous noirs acoustiques (24) qui délimite une portion centrale (26) circulaire des trous noirs acoustiques (24),
la portion centrale (26) des trous noirs acoustiques (24) comprenant uniquement l'une de la couche inférieure ou de la couche supérieure (22).

## Description

### Domaine technique de l'invention

La présente invention concerne un dispositif d'amortissement vibratoire destiné à un véhicule. Plus particulièrement, l'invention porte sur un panneau d'habillage pour une cabine d'un véhicule.

### Arrière-plan technique

Dans un véhicule, par exemple un avion, le bruit à l'intérieur de la cabine peut avoir deux origines, l'une aérienne due à l'aérodynamique, et l'autre solidienne résultant de l'injection par des pattes de fixation, d'efforts mécaniques dus au moteur, aux équipements et à l'aérodynamique.

De telles vibrations peuvent être problématiques pour le confort des utilisateurs qui peuvent percevoir ces vibrations lorsqu'ils sont dans la cabine de l'avion ou de tout autre type de véhicule.

Afin de réduire les vibrations d'origine solidienne, il est connu d'utiliser des plots de découplage vibratoire montés sur les pattes de fixation des panneaux d'habillage. Cependant, un tel aménagement du panneau d'habillage peut compliquer sa fixation au fuselage de l'avion et peut également augmenter son poids.

Par ailleurs, il est également connu des solutions consistant à utiliser des matériaux ou des revêtements présentant des caractéristiques d'amortissement vibratoire mais ces matériaux ou revêtements ont pour conséquence d'augmenter significativement la masse des panneaux d'habillage.

Ainsi, le but de la présente invention est de proposer un panneau d'habillage pour un véhicule dont la structure permet efficacement de réduire les vibrations d'origine solidienne tout en réduisant la quantité de matériaux nécessaire à sa conception, et ainsi ne pas augmenter la masse dudit panneau d'habillage.

De plus, l'utilisation du panneau d'habillage proposé par l'invention, au sein d'un véhicule, permet de réduire les coûts énergétiques dudit véhicule et ainsi de réduire son impact environnemental.

### Résumé de l'invention

L'invention propose un panneau d'habillage destiné à être fixé sur un cadre d'un véhicule, le panneau comprenant au moins quatre dispositifs de fixation, le panneau comprenant une couche centrale recouverte de part et d'autre par une couche inférieure et une couche supérieure,
le panneau comprenant au moins quatre trous noirs acoustiques de forme circulaire,
les trous noirs acoustiques étant formés chacun à proximité d'un des dispositifs de fixation du panneau,
les trous noirs acoustiques étant formés au moins par une réduction parabolique d'une épaisseur de la couche centrale, de manière que l'épaisseur de la couche centrale décroit depuis une circonférence externe des trous noirs acoustiques jusqu'à une circonférence interne des trous noirs acoustiques qui délimite une portion centrale circulaire des trous noirs acoustiques,
la portion centrale des trous noirs acoustiques comprenant uniquement l'une de la couche inférieure ou de la couche supérieure.

Selon d'autres caractéristiques de l'invention :
- la couche centrale est composée d'une mousse dense recyclable ;
- la couche centrale est composée d'une structure en nid d'abeille ;
- au moins une de la couche inférieure ou de la couche supérieure est revêtue d'un matériau amortissant ;
- le matériau amortissant est une peau en lin ;
- l'une de la couche inférieure ou de la couche supérieure s'étend jusqu'à la circonférence externe de chacun des trous noirs acoustiques, une peau de raccordement s'étendant entre la circonférence interne et la circonférence externe des trous noirs acoustiques de manière qu'elle relie la couche inférieure et la couche supérieure l'une à l'autre ;
- le panneau comprend une forme délimitée par au moins quatre coins, chaque dispositif de fixation étant positionné à proximité d'un des coins du panneau.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] est une vue générale en perspective d'un panneau d'habillage d'un véhicule selon l'invention, le panneau d'habillage comprenant quatre trous noirs acoustiques ;
[Fig.2] est une vue en coupe selon un plan A-A visible à la figure 1 d'un des trous noirs acoustiques du panneau d'habillage de la figure 1 ;
[Fig.3] est une vue rapprochée de la coupe selon le plan A-A du trou noir acoustique de la figure 2.

### Description détaillée de l'invention

Dans la description qui va suivre, des éléments identiques, similaires ou analogues seront désignés par les mêmes chiffres de référence.

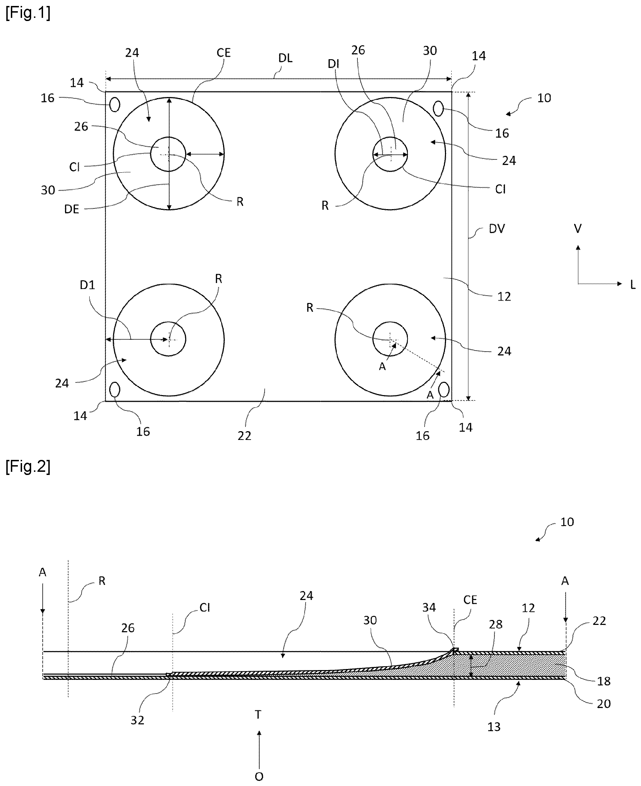

La figure 1 illustre un panneau 10 d'habillage destiné à être fixé dans un véhicule.

De manière plus précise et selon un exemple non limitatif de l'invention, le panneau 10 d'habillage de la figure 1 peut être fixé sur un fuselage d'un aéronef.

Dans la suite de la description le panneau 10 d'habillage sera décrit comme fixé sur le fuselage d'un aéronef mais il convient de considérer que le panneau 10 d'habillage proposé par l'invention peut être installé indifféremment et de manière non limitative au sein de différents types de véhicules qu'ils soient terrestres, aériens ou encore maritimes.

Selon l'exemple de l'invention illustré et non limitatif, le panneau 10 d'habillage peut être disposé dans une cabine d'un avion et comprend alors une face interne 13, visible à la figure 2, tournée vers un volume interne de la cabine et une face externe 12 tournée à l'opposé du volume interne de la cabine et donc invisible pour un utilisateur se trouvant dans la cabine de l'avion.

Selon l'exemple de l'invention illustré de la figure 1, le panneau 10 d'habillage présente une forme définie par quatre coins 14. Les coins 14 sont chacun formés au croisement de deux côtés du panneau 10 d'habillage.

Dans l'exemple de l'invention illustré, le panneau 10 d'habillage présente une forme rectangulaire.

Il convient de considérer que le panneau 10 d'habillage pourrait présenter tout autre forme délimitée par quatre coins ou plus de quatre coins.

Par ailleurs, le panneau 10 d'habillage peut être plan ou courbe.

Selon un exemple non limitatif de l'invention, le panneau 10 d'habillage comprend une dimension verticale DV comprise entre 750mm et 950mm, de préférence égale à 840mm et une dimension longitudinale DL comprise entre 850mm et 1050mm, de préférence égale à 940mm.

Le panneau 10 d'habillage est alors configuré de telle sorte qu'il soit fixé au fuselage, ici de l'aéronef, par des dispositifs de fixation 16.

Selon l'exemple illustré de l'invention, les dispositifs de fixation 16 sont positionnés à chacun des quatre coins 14 du panneau 10 d'habillage et sont représentés de manière schématique à la figure 1.

Selon un autre exemple non limitatif et non représenté, des dispositifs de fixation peuvent être positionnés en dehors des coins du panneaux d'habillage. Par exemple, lorsque le panneau d'habillage est configuré pour encadrer un hublot d'un aéronef, des dispositifs de fixation peuvent être positionnés également autour dudit hublot.

Ainsi et de manière non limitative, le panneau d'habillage peut comprendre plus de quatre dispositifs de fixation.

Les dispositifs de fixation 16 peuvent être par exemple et de manière non limitative des pattes de fixation. Selon d'autres exemples non limitatifs de l'invention, les dispositifs de fixation peuvent être des vis coopérant avec des alésages formés dans le fuselage de l'avion ou encore des clips collés, des vis ou des inserts noyés.

Les points de fixation du panneau 10 d'habillage, formés au niveau des dispositifs de fixation 16, constituent alors des points à forte vibration d'origine solidienne.

On définit des sollicitations d'origine solidienne comme étant celles injectées dans le panneau d'habillage par les pattes de fixation et plus généralement par les dispositifs de fixation.

Le panneau 10 d'habillage selon l'invention comprend une structure faite de plusieurs couches superposées les unes sur les autres, communément appelée structure « sandwich ».

De manière plus précise et visible sur la figure 2, le panneau 10 d'habillage comprend une couche centrale 18 recouverte de part et d'autre, selon une direction transversale T du panneau 10, d'une couche inférieure 20 et d'une couche supérieure 22.

Autrement nommée, la couche centrale 18 forme le cœur du panneau 10 d'habillage et les couches inférieure 20 et supérieure 22 forment respectivement des peaux supérieure et inférieure du panneau 10 d'habillage.

On comprend que les couches 20, 18, 22 sont superposées les unes sur les autres selon la direction transversale T du panneau 10 d'habillage tel que visible à la figure 2.

Selon l'exemple de l'invention, la couche supérieure 22 correspond à la couche qui s'étend au niveau de la face externe 12 du panneau 10 d'habillage et la couche inférieure 20 correspond à la couche qui s'étend au niveau de la face interne 13 du panneau 10 d'habillage.

Selon l'exemple de l'invention, le panneau 10 d'habillage comprend quatre trous noirs acoustiques 24 de forme circulaire, qui s'étendent chacun autour d'un axe de révolution R distinct.

Selon l'exemple de l'invention, l'axe de révolution R de chacun des trous noirs acoustiques 24 est parallèle à la direction transversale T du panneau 10 d'habillage.

Chacun des trous noirs acoustiques 24 est alors disposé à proximité d'un des dispositifs de fixation 16 du panneau 10 d'habillage.

Autrement dit, et conformément à l'exemple illustré, chacun des trous noirs acoustiques 24 est ici disposé à proximité d'un des coins 14 du panneau 10 d'habillage.

Il convient par ailleurs de considérer que les trous noirs acoustiques pourraient être disposés ailleurs sur le panneau d'habillage, tant que ceux-ci sont disposés à proximité des dispositifs de fixation du panneau d'habillage.

Par exemple et de manière non limitative, les trous noirs acoustiques 24 comprennent chacun une circonférence externe CE d'un diamètre externe DE compris entre 280mm et 320mm, de préférence 304mm, et de telle sorte que leur axe de révolution R respectif soit disposé à une première distance D1 comprise entre 150mm et 190mm, de préférence à 170mm, d'un des côtés du panneau 10 d'habillage délimitant le coin associé au trou noir acoustique, selon la direction verticale V ou la direction longitudinale L.

Tel que visible à la figure 2, les trous noirs acoustiques 24 sont formés au moins par une réduction parabolique d'une épaisseur 28 de la couche centrale 18, de manière que l'épaisseur 28 de la couche centrale 18 décroit depuis la circonférence externe CE évoquée précédemment jusqu'à une circonférence interne CI des trous noirs acoustiques 24 qui délimite une portion centrale 26 circulaire de ces derniers.

On comprend que la portion centrale 26 circulaire de chacun des trous noirs acoustiques 24 est coaxiale avec l'axe de révolution R desdits trous noirs acoustiques 24.

Par exemple et de manière non limitative, la circonférence interne CI délimitant la portion centrale 26 de chaque trou noir acoustique 24 présente un diamètre interne DI, visible à la figure 1, compris entre 80mm et 120mm, de préférence 100mm.

Ainsi, on comprend que la couche centrale 18 du panneau 10 d'habillage présente son épaisseur 28, prise selon la direction transversale T, qui décroit depuis la circonférence externe CE de chaque trou noir acoustique 24 jusqu'à la circonférence interne CI de chaque trou noir acoustique 24 de manière que leur portion centrale 26 soit dépourvue de couche centrale 18.

On comprend de ce qui précède, que la couche centrale 18 comprend, en coupe radiale par rapport à l'axe de révolution R de chaque trou noir acoustique 24 visible à la figure 2, une forme parabolique générée par son épaisseur 28 qui décroit depuis la circonférence externe CE jusqu'à la circonférence interne CI de chaque trou noir acoustique 24.

Tel que visible à la figure 2, la couche supérieure 22 s'étend en recouvrement de la couche centrale 18 jusqu'à la circonférence externe CE de chacun des trous noirs acoustiques 24.

On comprend alors que chacun des trous noirs acoustiques 24 du panneau 1 d'habillage est dépourvu de couche supérieure 22.

Ainsi on comprend que la portion centrale 18 de chaque trou noir acoustique 24 comprend uniquement la couche inférieure 20 parmi la couche supérieure 22 et la couche inférieure 20 du panneau 10 d'habillage.

Selon l'invention, le panneau 10 d'habillage comprend une peau de raccordement 30 qui s'étend entre la circonférence interne CI et la circonférence externe CE de chaque trou noir acoustique 24 de telle sorte qu'elle relie la couche supérieure 22 et la couche inférieure 20.

On comprend alors que la peau de raccordement 30 de chacun des trous noirs acoustiques 24 présente la forme d'un anneau qui s'étend circulairement autour de chaque portion centrale 26 de chaque trou noir acoustique 24.

De manière plus précise, on définit une première extrémité de raccordement 32 et une deuxième extrémité de raccordement 34 de la peau de raccordement 30

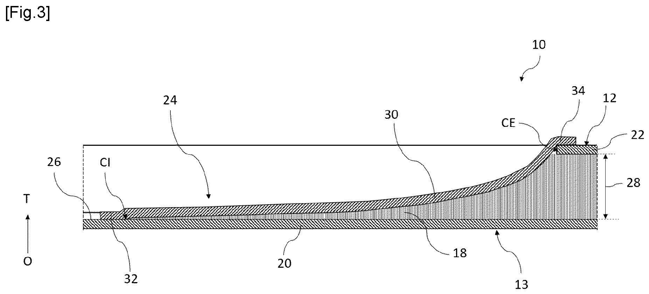

Visible à la figure 3, la première extrémité de raccordement 32 s'étend entre la couche centrale 18 et la couche inférieure 20 au niveau de la circonférence interne CI de chaque trou noir acoustique 24.

Plus précisément, la première extrémité de raccordement 32 s'étend radialement vers l'axe de révolution R de telle sorte qu'elle s'étende au-delà de la couche centrale 18 de manière à recouvrir partiellement la couche inférieure 20 dans la portion centrale 26.

Par exemple et de manière non limitative, la première extrémité de raccordement 32 s'étend radialement sur 4mm en recouvrement de la couche inférieure 20 vers l'axe de révolution R.

La deuxième extrémité de raccordement 34 s'étend entre la couche centrale 18 et la couche supérieure 22 au niveau de la circonférence externe CE de chaque trou noir acoustique 24.

Plus précisément, la deuxième extrémité de raccordement 34 s'étend radialement à l'opposé de l'axe de révolution R, au-delà de la circonférence externe CE de chaque trou noir acoustique 24 de telle sorte qu'elle recouvre partiellement la couche supérieure 22.

Par exemple et de manière non limitative, la deuxième extrémité de raccordement 34 s'étend radialement sur 4mm en recouvrement de la couche supérieure 22 à l'opposé de l'axe de révolution R.

Tel qu'illustré à la figure 3, en coupe radiale suivant les axes de révolution R de chaque trou noir acoustique 24, la première extrémité de raccordement 32 et la deuxième extrémité de raccordement 34 des peaux de raccordement 30 forment chacune un épaulement.

On comprend alors que les trous noirs acoustiques 24 selon l'invention sont structurés de telle sorte qu'ils comprennent à la fois une variation d'épaisseur entre leur circonférence interne CI et leur circonférence externe CE et à la fois une épaisseur sensiblement uniforme sur leur portion centrale 26.

Selon un exemple de l'invention, la couche centrale 18 du panneau 10 d'habillage est composée d'une structure en nid d'abeille.

Selon un autre exemple de l'invention, la couche centrale 18 du panneau 10 d'habillage est composée d'une mousse dense recyclable.

Par exemple et de manière non limitative, la mousse dense recyclable peut être de la mousse polyuréthane ou de la mousse polyéthylène.

L'épaisseur 28 de la couche centrale 18 du panneau 10 d'habillage, en dehors des trous noirs acoustiques, peut être comprise entre 6,5mm et 8,5mm. De préférence, l'épaisseur 28 de la couche centrale 18 prise selon la direction transversale T en dehors des trous noirs acoustiques, est égale à 7,5mm.

Selon un exemple de l'invention, la couche inférieure 20 est revêtu dans la portion centrale 26 de chaque trou noir acoustique 24 d'un matériau absorbant visco-élastique.

Selon un autre exemple, la couche inférieure peut être une peau de lin, matériau intrinsèquement amortissant, ce qui évite l'application du revêtement absorbant visco-élastique.

On tire ainsi avantage du panneau d'habillage selon l'invention en ce qu'il permet d'apporter une réduction du niveau vibratoire résultant de source solidienne à partir de 1kHz. La position des quatre trous noirs acoustiques à proximité des zones de fixation du panneau d'habillage, permet notamment d'isoler ces zones de fixation du reste du panneau d'habillage et ainsi d'augmenter l'effet de réduction des vibrations d'origine solidienne du panneau d'habillage.

L'invention améliore également la transparence acoustique du panneau d'habillage.

Par ailleurs, un autre avantage du panneau d'habillage selon l'invention est qu'il permet d'obtenir des effets antivibratoires optimaux sans augmenter la masse du panneau d'habillage, la structure des trous noirs acoustiques ne nécessitant pas l'ajout de matériau supplémentaire.

Également, le panneau d'habillage selon l'invention est avantageux en ce que la structure des trous noirs acoustiques ne nécessite pas de modifier les conditions de fixation du panneau d'habillage.

Enfin, la structure des trous noirs acoustiques leur permet d'être invisibles et imperceptibles depuis le volume interne de la cabine de l'avion, ceux-ci étant visibles au niveau de la face externe du panneau d'habillage.

## Revendications

1. Panneau (10) d'habillage destiné à être fixé sur un cadre d'un véhicule, le panneau (10) comprenant au moins quatre dispositifs de fixation (16), le panneau (10) comprenant une couche centrale (18) recouverte de part et d'autre par une couche inférieure (20) et une couche supérieure (22),
le panneau (10) comprenant au moins quatre trous noirs acoustiques (24) de forme circulaire,
les trous noirs acoustiques (24) étant formés au moins par une réduction parabolique d'une épaisseur (28) de la couche centrale (18), de manière que l'épaisseur (28) de la couche centrale (18) décroit depuis une circonférence externe (CE) des trous noirs acoustiques (24) jusqu'à une circonférence interne (CI) des trous noirs acoustiques (24) qui délimite une portion centrale (26) circulaire des trous noirs acoustiques (24),
la portion centrale (26) des trous noirs acoustiques (24) comprenant uniquement l'une de la couche inférieure (20) ou de la couche supérieure (22)
le panneau (10) étant **caractérisé en ce que** :
les trous noirs acoustiques (24) sont formés chacun à proximité d'un des dispositifs de fixation (16) du panneau (10),
l'une de la couche inférieure (20) ou de la couche supérieure (22) s'étend jusqu'à la circonférence externe (CE) de chacun des trous noirs acoustiques (24), une peau de raccordement (30) s'étendant entre la circonférence interne (CI) et la circonférence externe (CE) des trous noirs acoustiques (24) de manière qu'elle relie la couche inférieure (20) et la couche supérieure (22) l'une à l'autre.

2. Panneau (10) selon la revendication précédente, dans lequel la couche centrale (18) est composée d'une mousse dense recyclable.

3. Panneau (10) selon la revendication 1, dans lequel la couche centrale (18) est composée d'une structure en nid d'abeille.

4. Panneau (10) selon l'une quelconque des revendications précédentes, dans lequel au moins une de la couche inférieure (20) ou de la couche supérieure (22) est revêtue d'un matériau amortissant.

5. Panneau (10) selon la revendication précédente, dans lequel le matériau amortissant est une peau en lin.

6. Panneau (10) selon l'une quelconque des revendications précédentes, comprenant une forme délimitée par au moins quatre coins (14), chaque dispositif de fixation (16) étant positionné à proximité d'un des coins (14) du panneau (10).
